# EUROPÄISCHE PATENTSCHRIFT

(11) **EP 1 264 474 B1**
(45) Veröffentlichungstag und Bekanntmachung des Hinweises auf die Patenterteilung: **13.08.2003**
(21) Anmeldenummer: 00908893.1
(22) Anmeldetag: 17.03.2000
(51) Int. Cl.: H04N 5/225, H04N 3/15

(54) **KAMERA MIT EINER ANORDNUNG OPTOELEKTRISCHER WANDLER**
CAMERA WITH AN OPTOELECTRIC CONVERTER ARRANGEMENT
APPAREIL DE PRISE DE VUES DOTE D'UN DISPOSITIF DE CONVERSION OPTOELECTRONIQUE

(43) Veröffentlichungstag der Anmeldung: 11.12.2002
(73) Patentinhaber: Sinar AG, 8245 Feuerthalen (CH)
(72) Erfinder: GFELLER, Karl, CH-8246 Langwiesen (CH); MUEHL, Ulf, D-78266 Büsingen (DE)
(74) Vertreter: Troesch Scheidegger Werner AG
(86) Internationale Anmeldenummer: CH0000156
(87) Internationale Veröffentlichungsnummer: WO00036897

(56) Entgegenhaltungen:
- PATENT ABSTRACTS OF JAPAN vol. 016, no. 326 (E-1235), 16. Juli 1992 (1992-07-16) & JP 04 096585 A (BROTHER IND LTD), 27. März 1992 (1992-03-27)
- PATENT ABSTRACTS OF JAPAN vol. 1998, no. 08, 30. Juni 1998 (1998-06-30) & JP 10 065975 A (FUJITSU GENERAL LTD), 6. März 1998 (1998-03-06)

## Beschreibung

Die vorliegende Erfindung betrifft eine Stillbildkamera mit einer optoelektrischen Wandleranordnung mit einer Sensorfläche in der Bildebene, welche Sensorfläche kleiner ist als der abzubildende Bereich in besagter Ebene und bei der die Wandleranordnung parallel zur Bildebene gesteuert getrieben verschieblich gelagert ist.

Optoelektrische Wandleranordnungen, wie CCD Arrays, sind relativ kostenaufwendige Bauteile an digitalen Kameras. Dies insbesondere, wenn sie relativ grossflächig ausgebildet sind. Bei Digitalkameras mit in der Bildebene relativ grossem abzubildenden Bereich ist es deshalb bekannt, optoelektrische Wandleranordnungen vorzusehen, deren Sensorfläche kleiner ist als der abzubildende Bereich in der Bildebene. Die Wandleranordnung wird mittels Kreuztischführungen und - antrieben, zeitsequentiell, über einzelne Bereiche des abzubildenden Bereiches in der Bildebene bewegt. In jeder Position der Wandleranordnung wird das optoelektrisch gewandelte Teilbild abgespeichert. Diese Teilbilder werden anschliessend elektronisch zum Gesamtbild wieder vereint.

Das Vorsehen präziser Kreuztischführungen zur exakten mechanischen Verschiebung und Positionierung der optoelektrischen Wandleranordnung mit den unabhängig ansteuerbaren Koordinatenantrieben ist konstruktiv äusserst aufwendig.

Es ist Aufgabe der vorliegenden Erfindung, wie in Anspruch 1 definiert, eine Stillbildkamera eingangs genannter Art zu schaffen, bei welcher die Wandleranordnung, ohne Einbusse an Positionierungspräzision, wesentlich einfacher und kostengünstig über den Bildteilbereichen positioniert werden kann.

Unter einem ersten nicht erfindungsgemässen Lösungsaspekt wird dies dadurch erreicht, dass die optoelektrische Wandleranordnung um eine Achse senkrecht zur Bildebene drehgelagert ist. Dies ist zum Beispiel in JP-A-04 096585 dargestellt.
Durch dieses Vorgehen wird erreicht, dass die Wandleranordnung, nurmehr höchst einfach drehgelagert, mittels eines einzigen Antriebes über verschiedene Teilbereiche des abzubildenden Bereiches in der Bildebene sequentiell geschwenkt werden kann.

Bei diesem Vorgehen ist aber grundsätzlich zu berücksichtigen, dass aufgrund der Schwenkbewegung der Wandleranordnung die Bildteilbereiche sequentiell verschwenkt auf der Sensorfläche der Wandleranordnung erscheinen und entsprechend so positioniert optoelektrisch gewandelt werden. Bei diesem erfindungsgemässen Vorgehen wird deshalb vorgeschlagen, dass der elektrische Ausgang der Wandlereinheit, mit einem elektrisch den gewandelten Bildbereich repräsentierenden Signal, sowie ein die Drehposition der Wandleranordnung identifizierendes Signal mit Eingängen einer Recheneinheit wirkverbunden sind, welche das den Bildbereich repräsentierende Signal, nach Massgabe des die Drehposition identifizierenden Signals, in ein den erwähnten Bildbereich in vorgegebener zweidimensionaler Ausrichtung - bezüglich der Kamera - repräsentierendes Signal wandelt.

Dabei verändert die Recheneinheit die elektrisch anliegende Bildbereich-Information nicht, sondern dreht rechnerisch, im wesentlichen aufgrund einer Koordinatentransformation, die elektrisch anliegende Bildinformation in eine vorgegebene, zweidimensionale Ausrichtung zurück, derart, dass jedes elektrische Bildbereichsignal einen Bildbereich in gleicher, vom mechanischen Drehwinkel unabhängiger Ausrichtung repräsentiert.

Obwohl es durchaus möglich ist, die Wandleranordnung bezüglich einer Drehachse schwenkzulagern, welche ausserhalb des abzubildenden Bereiches in der Bildebene liegt, wird bevorzugterweise vorgeschlagen, dass die optoelektrische Wandleranordnung bezüglich der optischen Achse drehgelagert ist. Dadurch ergibt sich einerseits die Möglichkeit, mit optimal kleiner Sensorfläche der Wandleranordnung den abzubildenden Bereich sequentiell in Teilbereichen abzutasten, und es wird die erwähnte elektronische Drehungskompensation an der erwähnten Recheneinheit besonders einfach.

In einem zweiten, heute bevorzugten erfindungsgemässen Lösungsansatz ist die optoelektrische Wandleranordnung, bezüglich ihrer Verschieblichkeit parallel zur Bildebene, mittels einer Nocken-/Kurven-Anordnung geführt. Grundsätzlich wird dadurch ermöglicht, die optoelektrische Wandleranorndung in einer beliebigen Bewegungsbahn sequentiell über den abzubildenden Bereich in der Bildebene zu führen, diesen praktisch sequentiell abzutasten, und dies weiterhin mit einem einzigen gesteuerten Antrieb zu realisieren.

In einer weitaus bevorzugten Ausführungsform der erfindungsgemässen Stillbildkamera unter dem erwähnten zweiten Aspekt wird die optoelektrische Wandleranordnung bezüglich ihrer Verschieblichkeit mittels der Nocken-/Kurvenanordnung ausschliesslich translatorisch geführt. Dies hat den wesentlichen Vorteil, dass, aufgrund der rein translatorischen Verschiebung der optoelektrischen Wandleranordnung, keine relative Verschwenkung der Abbildung auf der Sensorfläche der Wandleranordnung erfolgt und somit keine rechnerische Drehungs- bzw. Schwenkungskompensation vorzusehen ist. Bezüglich der dabei erfolgenden Bewegung der optoelektrischen Wandleranordnung werden mithin die Vorteile einer Kreuztisch-Bewegungsführung beibehalten.

In einer weiter bevorzugten Ausführungsform der erfindungsgemässen Stillbildkamer unter dem zweiten Ansatz wird die optoelektrische Wandleranordnung mittels einer kreisförmigen Nocken-/Kurven-Anordnung geführt.

Dabei ist die optoelektrische Wandleranordnung bevorzugterweise an mindestens zwei, vorzugsweise mehr als zwei kreisförmigen Nocken-/Kurven-Anordnungen gleicher Wirkungsradien geführt.

Sind lediglich zwei der erwähnten Nocken-/Kurven-Anordnungen vorgesehen, und damit, über die Nocken, die optoelektrische Wandleranordnung entlang einer Geraden geführt, so wird selbstverständlich sichergestellt, dass beide Nocken-/Kurven-Anordnungen gleichzeitig jeweils zwingend im gleichen Drehsinn betrieben werden. Dies kann z.B. durch Bewegungskopplung oder durch Verhinderung, dass die Nocken-/Kurven-Anordnungen in ihre Todpunkte getrieben werden können, realisiert werden.

In einer bevorzugten Ausführungsform der erfindungsgemässen Stillbildkamera unter all ihren Aspekten umfasst die Sensorfläche der optoelektrischen Wandleranordnung in Aufsicht mindestens eine mindestens genähert rechteckförmige oder quadratische Fläche.

Im weiteren ist an der erfindungsgemässen Stillbildkamera unter all ihren Aspekten bevorzugterweise ein einziger, gesteuerter Drehantrieb vorgesehen, welcher, bezüglich der Kamera stationär, mit der optoelektrischen Wandleranordnung wirkverbunden ist.

Die Erfindung wird anschliessend anhand von Figuren erläutert.

Es zeigen:
- Fig. 1: schematisch, eine rückwärtige Aufsicht auf die Bildebene einer nicht erfindungsgemässen Stillbildkamera unter dem ersten nicht erfindungsgemässen Ansatz, mit einer ersten Ausführungsform der Führung und des Antriebes der optoelektrischen Wandleranordnung;
- Fig. 2: weiter schematisiert, eine Ansicht analog derjenigen von Fig. 1, einer zweiten Ausführungsform unter dem ersten nicht erfindungsgemässen Aspekt;
- Fig. 3: in perspektivischer, vereinfachter Darstellung, eine bevorzugte Ausführungsform des Antriebs und der Führung der optoelektrischen Wandleranordnung an einer erfindungsgemässen Stillbildkamera unter dem zweiten erfindungsgemässen und heute bevorzugten Aspekt, und
- Fig. 4: eine perspektivische Rückansicht der Anordnung gemäss Fig. 3.

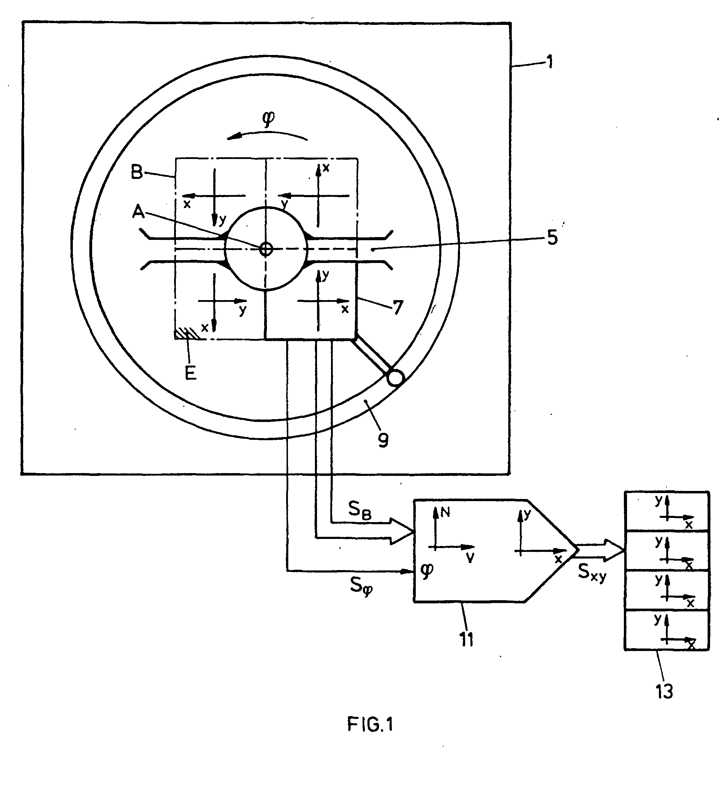

In Fig. 1 ist schematisch und vereinfacht eine Aufsicht auf eine Montageplatte 1 an einer nicht erfindungsgemässen Stillbildkamera dargestellt, woran Führung und Antrieb für eine optoelektrische Wandleranordnung vorgesehen sind. Die Ansicht ist in Richtung hin zur Kameraoptik dargestellt. Es bezeichnet A die gegen die Bildebene E gerichtete, optische Achse der Kamera.

An der Montageplatte 1 der Kamera ist, bezüglich der optischen Achse A zentriert, ein Drehantrieb 3, wie dargestellt beispielsweise an Trägern 5, fix montiert. Auf der (nicht dargestellten) Antriebsachse des Drehantriebes 3 ist mindestens eine, gemäss Fig. 1 beispielsweise quadratförmige, optoelektrische Wandleranordnung 7, z.B. in Form eines CCD Arrays, im Bereich ihrer einen Ecke gelagert. Gegebenenfalls, und wie in Fig. 1 dargestellt, ist diejenige Ecke der Wandleranordnung 7, die der Ecke an der Drehachse des Drehantriebes 3 gegenüberliegt, in einer koaxial zur optischen Achse A umlaufenden Führungsnut 9 gleit- oder rollgelagert.

Die in Fig. 1 ausgezogen dargestellte, einzige Wandleranordnung 7 wird durch sequentielle Drehung beispielsweise in Richtung ϕ um jeweils 90° in die vier strichpunktiert dargestellten Positionen geschwenkt und in jeder der erwähnten Positionen wird der entsprechende Teilbereich des abzubildenden Bildbereiches B optoelektrisch gewandelt und gespeichert.

Am einen vorgesehenen Wandler 7 ist, gemäss Fig. 1, die räumliche Orientierung mit Hilfe eines x/y-Koordinatensystems eingetragen. Wie ohne weiteres ersichtlich, wird bei jeder 90°-Drehung der Wandleranordnung 7 ihre absolute Orientierung bezüglich des Bereiches B um 90° gedreht. Damit wird jeder der vier Teilbereiche bezüglich der Sensorfläche des Wandlers 7 bei fortschreitender 90°-Drehung verkippt. Wird nun ausgangsseitig der optoelektrischen Wandleranordnung 7 jeder gewandelte Bildteilbereich tel quel gespeichert und nachmals die gespeicherten Teilbereiche zum Erhalt des Gesamtbildes wieder zusammengesetzt, so erscheint jeder der vier Teilbereiche um jeweils 90° verkippt.

Wie nun in Fig. 1 schematisch weiter dargestellt, werden deshalb nach oder, wie dargestellt, vor der Abspeicherung die den elektronisch gewandelten Teilabschnitten entsprechenden Ausgangssignale S_{B} des optoelektrischen Wandlers 7 sowie beispielsweise und wie dargestellt vom Drehantrieb 3, ein seine jeweilige Drehposition ϕ identifizierendes Signal S_{ϕ} einer Recheneinheit 11 zugeführt. Darin wird die jeweilige v/w-Position der Teilabschnitte, unter Berücksichtigung des jeweiligen Schwenkwinkels ϕ, in die erwünschte vorgegebene x/y-Ausrichtung umgelegt. Darnach werden die nun alle räumlich gleich gerichteten elektronischen Teilabschnitte bzw. -bereiche wie schematisch an der Speichereinheit 13 dargestellt abgelegt und können anschliessend zum Gesamtbild entsprechend dem abzubildenden Bildbereich B der Kamera zusammengesetzt werden.

Anstelle von quadratischen Wandleranordnungen, wie in Fig. 1 dargestellt und wie bei dieser Ausführungsform bevorzugt, können gegebenenfalls auch rechteckförmige oder anders geformte Wandleranordnungen eingesetzt werden.

Bevorzugterweise wird die Wandleranordnung 7 so bezüglich der Drehachse des Drehantriebes 3 gelagert, dass ein Überlappungsbereich des Bildbereiches B an sich jeweils folgenden Schwenkpositionen durch die Wandleranordnung 7 wiederholt gewandelt werden. Damit können die Teilbildbereiche mittels sogenannter Mosaicing- oder Stitching-Software optimal vereint werden. Das Mass des Überlappungsbereiches ergibt sich auch aus Toleranzen der Kameramechanik und/oder kleiner, nie völlig auszuschliessender Kamerabewegungen während der sequentiellen Aufnahmen.

Im weiteren kann selbstverständlich, bei der Ausführungsform gemäss Fig. 1, die Wandleranordnung 7 zwei der in Fig. 1 eingetragenen Wandleranordnungen umfassen, so dass mit zwei 90°-Schwenkbewegungen der ganze Bildbereich B abgetastet ist.

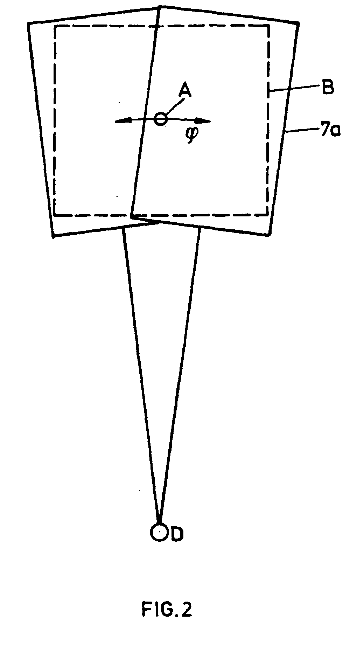

In Fig. 2 ist, gegenüber Fig. 1 noch weiter schematisierend, eine weitere, mindestens im heutigen Zeitpunkt weniger bevorzugte Ausführungsform der nicht erfindungsgemässen Stillbildkamera, dargestellt weiterhin dem ersten Aspekt folgend. Hierbei ist die Wandleranordnung 7a nicht mehr koaxial zur optischen Achse A drehbeweglich und gesteuert getrieben eingebaut, sondern bezüglich einer exzentrischen Schwenkachse D. Entsprechend ist der hier nicht dargestellte Antrieb versetzt. Ähnlich einer Kellenbewegung wird die eine vorgesehene Wandleranordnung 7a sequentiell um den kleinen Schwenkwinkel ϕ geschwenkt. Mit den sequentiellen Schwenkpositionen der Wandleranordnung 7a wird wiederum der gesamte in Fig. 2 gestrichelt eingetragene, aufzunehmende Bildbereich B der Kamera in der Bildebene abgetastet. In Analogie zu Fig. 1 wird auch hier die Schwenkung der jeweiligen Teilbereiche bezüglich des Wandlers 7a, entsprechend den jeweiligen Schwenkpositionen, durch eine Recheneinheit, beispielsweise ausgelegt wie anhand von Fig. 1 erläutert wurde, kompensiert.

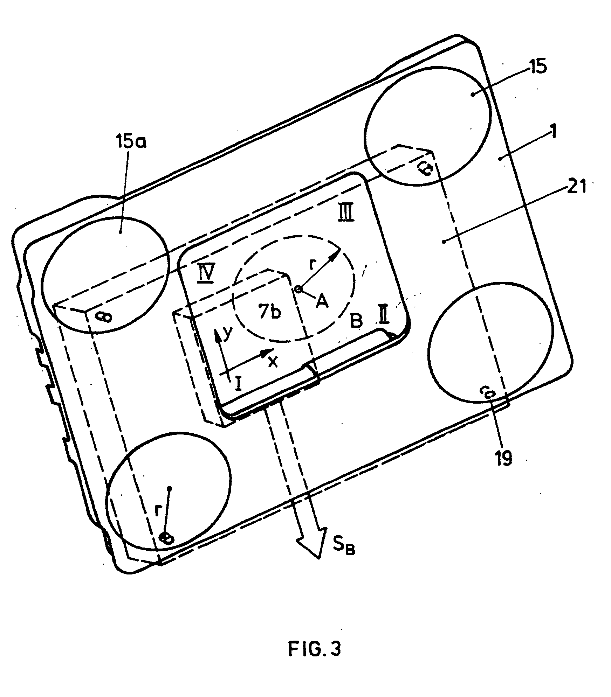

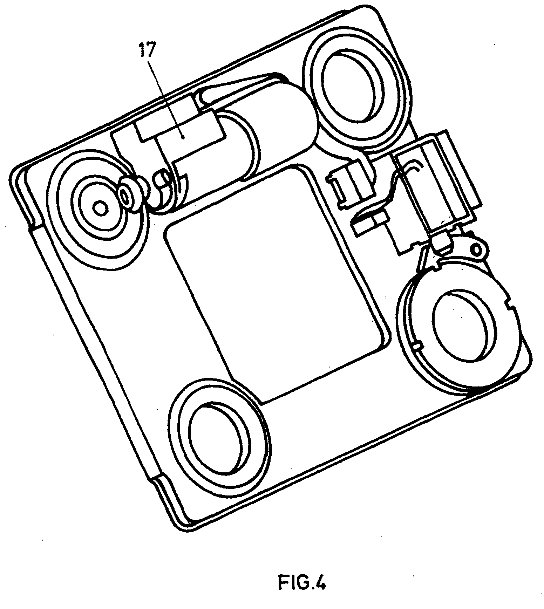

In Fig. 3 ist in perspektivischer Ansicht und wiederum vereinfacht die Montageplatte 1 an der erfindungsgemässen Stillbildkamera dargestellt, gemäss dem zweiten Aspekt, dem heute bevorzugten. An der Montageplatte 1 sind vier kreisförmige Nockenscheiben 15 gelagert. Eine der Scheiben, beispielsweise 15a, ist rückseitig und wie sich aus Fig. 4 ergibt durch einen gesteuerten Antriebsmotor 17 angetrieben. Die übrigen drei Nockenscheiben 15 sind Freilaufscheiben. Jede der Scheiben 15a, 15 trägt einen vorragenden Mitnehmernocken 19. Die Nocken 19 greifen in entsprechende Führungsbohrungen in eine Wandlerträgerplatte 21 ein, je in deren Eckpartien eingelassen. Die Wandlerträgerplatte 21 ist in Fig. 3 aus Übersichtsgründen gestrichelt eingetragen. In ihrem Zentrumsbereich ist darin die Wandleranordnung 7b eingelassen. Aufgrund der Antriebsdrehbewegung mittels der Antriebsnockenscheibe 15a wird mit der Wandlerträgerplatte 21 die Wandleranordnung 7b in einer Kreisbahn mit dem Nockenexzenterradius r um die optische Achse A der Kamera im Bildbereich B der Bildebene gedreht, jedoch ausschliesslich aufgrund einer translatorischen Bewegung. Damit ist der Vorteil erwirkt, dass die räumliche x/y-Ausrichtung der Wandleranordnung 7b und damit ihrer Sensorfläche trotz Umlaufens um die Achse A stationär bleibt.

Anstelle einer quadratischen Wandleranordnung 7b kann es bei dieser Ausführungsform angezeigt sein, eine rechteckförmige Wandleranordnung in Hoch- oder Querlage ausgerichtet einzusetzen. Im weiteren kann die vorgesehene Wandleranordnung auch mehr als eine Anordnung gemäss 7b von Fig. 3 aufweisen, so z.B. zwei nebeneinander liegende oder zwei übereinander liegende oder zwei sich diagonal gegenüber liegende. Auch hier ist die Wandleranordnung 7b bezüglich ihrer Umlaufbewegung um die Achse A so bemessen, dass sie in den vier Positionen, entsprechend den Quadranten I bis IV, Überlappungsbereiche des Bildbereiches B in sich folgenden Positionen doppelt aufnimmt bzw. wandelt, wie dies im Zusammenhang mit Fig. 1 und 2 bereits erläutert wurde.

Im weiteren kann bei der Ausführungsform gemäss den Fig. 3 und 4 die Bewegungsführung der Wandlerträgerplatte 21 auch mit nur zwei oder drei Nockenscheiben 15 realisiert werden. Mit der Ausführungsform gemäss den Fig. 3 und 4 ist in bevorzugter Art und Weise eine Bewegungsführung der Wandleranordnung 7b mit einer Nocken-/Kurven-Führung realisiert. Die Kurve ist durch die Kreisbahn insbesondere der antreibenden Nockenscheibe realisiert, entlang welcher der in die Wandlerträgerplatte 21 eingreifende, generell mit dem Wandler 7b wirkverbundene Nocken zwangsgeführt ist. Selbstverständlich können die Nocken 19 auch an der Wandlerträgerplatte 21 fixiert sein und an der Montageplatte 1 umlaufende Kreisnuten vorgesehen sein oder, im Sinne mechanischer Umkehrung, können eine oder mehrere bzw. alle Nockenscheiben an der Wandlerträgerplatte 21 vorgesehen sein, die Führungsnocken oder die Aufnahmen für die Führungsnocken an der Montageplatte 1. Da letztere in der Kamera 1 stationär ist, wird aber bevorzugt die angetriebene Kurven-Anordnung an ihr vorgesehen.

Gegebenenfalls können von der kreisförmigen Führungsbahn abweichende Nocken-/Führungskurven-Wirkverbindungen eingesetzt werden.

Mit der erfindungsgemässen Stillbildkamera wird erreicht, dass eine optoelektrische Wandleranordnung, deren Sensorfläche kleiner ist als der abzubildende Bildbereich in der Bildebene, durch gesteuert getriebene Verschiebung sukzessive Bildteilbereiche wandelt, wobei äussert einfache Bewegungsführungen realisiert werden und nur ein einziger Antriebsmotor, kamerafest, auf die Wandleranordnung zur Wirkung gebracht wird.

## Patentansprüche

1. Stillbildkamera mit einer optoelektrischen Wandleranordnung mit einer Sensorfläche in der Bildebene, welche Sensor-Fläche kleiner ist als der abzubildende Bildbereich in besagter Ebene und bei der die Wandleranordnung parallel zur Bildebene gesteuert getrieben verschieblich gelagert ist, **dadurch gekennzeichnet, dass** die optoelektrische Wandleranordnung (7b), bezüglich ihrer Verschieblichkeit parallel zur Bildebene, mittels einer Nocken-/Kurven-Anordnung (19, 15) geführt ist.

2. Stillbildkamera nach Anspruch 1, **dadurch gekennzeichnet, dass** die optoelektrische Wandleranordnung (7b) ausschliesslich translatorisch (x,y) geführt ist.

3. Stillbildkamer nach Anspruch 2, **dadurch gekennzeichnet, dass** die optoelektrische Wandleranordnung (7b) mittels einer kreisausschnitts- oder kreisförmigen Nocken-/Kurven-Anordnung geführt ist.

4. Stillbildkamera nach Anspruch 3, **dadurch gekennzeichnet, dass** die optoelektrische Wandleranordnung (7b) an mindestens zwei kreisförmigen Nocken-/Kurven-Anordnungen (19, 15) gleicher Wirkungsradien (r) geführt ist.

5. Stillbildkamera nach einem der Ansprüche 1 bis 4, **dadurch gekennzeichnet, dass** die Sensorfläche der optoelektrischen Wandleranordnung mindestens eine mindestens genähert rechteckförmige oder quadratische Fläche umfasst.

6. Stillbildkamera nach einem der Ansprüche 1 bis 5, **dadurch gekennzeichnet, dass** ein einziger Drehantrieb bezüglich der Kamera stationär mit der optoelektrischen wandleranordnung (7, 7a, 7b) wirkverbunden ist.

## Claims

1. A still camera comprising an optoelectric transducer arrangement with a sensor surface at the image plane whereby said sensor surface is smaller than the image area to be imaged in said plane, and whereby the transducer arrangement is mounted parallel to the plane of the image while being controlled, driven, and slidable therein, **characterized in that** the optoelectric transducer arrangement (7b) is guided by means of a cam/curve arrangement (19,15) relative to its shifting characteristic that is parallel to the image plane.

2. A still camera according to claim 1, wherein the optoelectric transducer arrangement (7b) is exclusively guided in a translatory (x, y) manner.

3. A still camera according to claim 2, wherein the optoelectric transducer arrangement (7b) is guided by means of a circle segment arrangement or an annular cam/curve arrangement.

4. A still camera according to claim 3, wherein the optoelectric transducer arrangement (7b) is guided on at least two annular cam/curve arrangements (19, 15) with equal effective radii (r).

5. A still camera according to any of the claims 1 to 4, wherein the sensor surface of the optoelectric transducer arrangement comprises at least one approximately rectangular or square surface.

6. A still camera according to any of the claims 1 to 5, wherein one single rotating drive stationarily attached to the camera is actively connected to the optoelectric transducer arrangement (7, 7a, 7b).

## Revendications

1. Appareil de prise de vue stationnaires comprenant un dispositif transducteur optoélectrique avec une surface de détection dans le plan focal, ladite surface de détection étant plus petite que la zone d'image dont une image est à produire dans ledit plan et ledit dispositif transducteur étant monté entraîné sur commande de manière déplaçable parallèlement au plan focal, **caractérisé en ce que** le dispositif transducteur optoélectrique (7b) est guidé en ce qui concerne sa translatabilité parallèlement au plan focal au moyen d'un dispositif à cames/courbes (19,15).

2. Appareil selon la revendication 1, **caractérisé en ce que** le dispositif transducteur optoélectrique (7b) est guidé exclusivement d'une manière translatoire (x, y).

3. Appareil selon la revendication 2, **caractérisé en ce que** le dispositif transducteur optoélectrique (7b) est guidé au moyen d'un dispositif à cames/courbes en forme de secteurs circulaires ou cercles.

4. Appareil selon la revendication 3, **caractérisé en ce que** le dispositif transducteur optoélectrique (7b) est guidé sur au moins deux dispositifs à cames/courbes circulaires (19, 15) à rayons effectifs égaux (r).

5. Appareil selon l'une des revendications 1 à 4, **caractérisé en ce que** la surface de détection du dispositif transducteur optoélectrique comprend au moins une surface de forme approximativement rectangulaire ou carrée.

6. Appareil selon l'une des revendications 1 à 5, **caractérisé en ce qu'**un seul moteur rotatif stationnaire par rapport à l'appareil est fonctionnellement connecté avec le dispositif transducteur optoélectrique (7, 7a, 7b).
